(19) Europäisches Patentamt / European Patent Office / Office européen des brevets

(11) **EP 1 439 087 B1**

(12) **EUROPÄISCHE PATENTSCHRIFT**

(45) Veröffentlichungstag und Bekanntmachung des Hinweises auf die Patenterteilung:
**08.05.2013 Patentblatt 2013/19**

(51) Int Cl.:
**B60W 10/06** *(2006.01)* **F16H 61/688** *(2006.01)*

(21) Anmeldenummer: **03029036.5**

(22) Anmeldetag: **16.12.2003**

(54) **Verfahren zur Steuerung und Regelung des Kupplungs- und Motordrehmoments während eines Schaltvorgangs eines automatisierten Schaltgetriebes oder eines Doppelkupplungsgetriebes**

Method for adjusting and controlling engine and clutch torque during gear shifting of an automated or dual clutch transmission

Procédé de commande et de régulation du couple moteur et du couple d'embrayage durant un changement de vitesse d'une transmission robotisée ou à double embrayage

(84) Benannte Vertragsstaaten:
**DE FR IT**

(30) Priorität: **16.01.2003 DE 10301502**

(43) Veröffentlichungstag der Anmeldung:
**21.07.2004 Patentblatt 2004/30**

(73) Patentinhaber: **Continental Automotive GmbH
30165 Hannover (DE)**

(72) Erfinder:
• **Lankes, Martin
  93055 Regensburg (DE)**
• **Michau, Peter
  38102 Braunschweig (DE)**

(56) Entgegenhaltungen:
WO-A-01/20200          DE-C1- 19 904 129
US-A- 5 583 766        US-A- 5 609 545
US-A1- 2002 006 851    US-B1- 6 258 009
US-B1- 6 389 346

## Beschreibung

Die Erfindung betrifft ein Verfahren zur Steuerung und Regelung des Kupplungs- und Motordrehmoments während eines Schalvorgangs eines automatisierten Schaltgetriebes oder eines Doppelkupplungsgetriebes gemäß dem Oberbegriff des Patentanspruchs 1.

Um den Kraftstoffverbrauch eines Kraftfahrzeugs zu reduzieren und den Fahrkomfort für den Fahrer zu verbessern bieten Automobilhersteller vermehrt Kraftfahrzeuge mit automatisierten Schaltgetrieben oder Doppelkupplungsgetrieben an. Eine zentrale Aufgabe zur Realisierung eines guten Schaltverhaltens bei diesen Getriebetypen ist es, zunächst bei konventionellen Schaltgetrieben das manuelle Zusammenspiel der Kupplungs- und Fahrpedalbetätigung beim Wechseln der Getriebegänge zu analysieren und auf deren physikalisch-technischen Grundlagen zurückzuführen. Dabei sind neben den Fahrzeugumgebungsbedingungen, wie beispielsweise der Umgebungstemperatur, der Fahrbahnbeschaffenheit und der Fahrbahnsteigung auch die möglichen Verhaltensweisen des Fahrers bei Schalt-, Beschleunigungs- und Verzögerungsvorgängen zu berücksichtigen. Zudem ist in diese Analyse ebenfalls mit einzubeziehen, dass das Drehzahlniveau zum Schaltzeitpunkt sowie die Schaltrichtung (Hochschaltung oder Rückschaltung) variieren können.

Die bei einer solchen Analyse gewonnenen Erkenntnisse sind dann bei den neuen Getriebetypen mit Vorteil für schnelle, materialschonende und gleichzeitig kraftstoffsparende sowie komfortable Gangwechsel nutzbar, wofür allerdings spezielle Steuerungs- und Regelungsverfahren bereitzustellen sind. Mit deren Hilfe kann dann das Kupplungs- und Motordrehmoment während eines Schaltvorgangs eines solchen Getriebes beeinflusst werden.

So ist aus dem Artikel "Sequenzielles M-Getriebe der zweiten Generation mit Drivelogic - Teil 1" der Zeitschrift "ATZ" 11/2001, S. 1024 - 1035 ein Steuerungs- und Regelungsverfahren für ein automatisiertes Schaltgetriebe bekannt, bei dem während eines Schaltablaufs die drei Phasen Auskuppeln, Schalten und Einkuppeln entsprechend der jeweiligen Fahrsituation variieren. Dazu werden sogenannte Kupplungsrampen, also das Zusammenführen bzw. Auseinanderlaufen von Motor- und Getriebedrehzahl, in einem Motorsteuergerät fahrsituationsabhängig zyklisch berechnet und an den gerade vorliegenden Schaltvorgang (Hoch- oder Rückschaltung im Schub- oder Zugbetrieb) angepasst. Zudem stellt ein Getriebesteuergerät aufgrund dieser alternierenden Sollwert-Vorgaben das zugehörige Kupplungsmoment ein, indem es eine Kupplungsposition nach einem speziellen Algorithmus anfährt.

Der Motor wird in Abhängigkeit von diesen Kupplungsrampen beim Aus- und Einkuppeln ebenfalls gesteuert. Beim Einkuppeln wird diese Vorsteuerung zusätzlich durch einen Regler beeinflusst, der die Sollwertvorgabe des Motorsteuergeräts in Abhängigkeit von dem Verhältnis von Motordrehzahl und Getriebedrehzahl überlagert. Damit kann gemäß dieser Druckschrift der Drehmomentaufbau an der Kupplung für das Komfort- und Beschleunigungsverhalten des Antriebsstranges optimiert werden. Für die einzelnen Schaltvorgänge kommen dabei unterschiedliche Reglerstrategien und Reglerabstimmungen zum Einsatz. Die mit einer solchen Steuerung- und Regelung erreichbare Schaltqualität ist aber noch weiter verbesserbar.

Der nächstliegende bekannt gewordene Stand der Technik ist der US 6298009 zu entnehmen.

US 6,258,009 B1 zeigt ein Verfahren und eine Vorrichtung zum Ändern einer Untersetzung an einem Schaltgetriebe oder einer Achse mit schaltbarem Getriebe. Dabei wird eine Synchronisation einer Motordrehzahl mit einer erwarteten Getriebeeingangsdrehzahl unterstützt.

Vor diesem Hintergrund ist es die Aufgabe der Erfindung, ein Steuerungs- und Regelungsverfahren für automatisierte Schaltgetriebe oder automatische Doppelkupplungsgetriebe vorzustellen, mit dem noch besser als bisher schnelle, materialschonende, kraftstoffsparende sowie komfortable Gangwechsel möglich sind.

Die Lösung dieser Aufgabe ergibt sich aus den Merkmalen des Hauptanspruchs. Vorteilhafte Weiterbildungen und sinnvolle Ausgestaltungen des erfindungsgemäßen Verfahrens sind dagegen den Unteransprüchen entnehmbar.

Um bei automatisierten Schaltgetrieben und Doppelkupplungsgetrieben einen sehr guten Schaltvorgang erzielen zu können, ist eine koordinierte Führung des Kupplungs- und Motordrehmoments vorgesehen. Entsprechend dem erfindungsgemäßen Verfahren findet demnach während des gesamten Schaltvorgangs eine Kupplungsmomentsteuerung statt, während das Motordrehmoment nur solange gesteuert wird, wie die Kupplung sicher geschlossen ist. Bei schlupfender oder vollständig geöffneter Kupplung findet dagegen eine Motordrehzahlregelung ausgehend von der Getriebeeingangsdrehzahl des bei Beginn des Schaltvorgangs eingelegten Ganges solange statt, bis die Motordrehzahl einen vorbestimmten Abstand zu der Getriebeeingangsdrehzahl (Motorzieldrehzahl oder Synchrondrehzahl) des Zielgangs erreicht hat und das Kupplungsmoment auf den für diesen Schalt vorgang vorgesehenen Endwert angehoben ist. Anschließend erfolgt dann bei schlupfender oder geschlossener Kupplung ein Wechsel zurück zur Motordrehmomentsteuerung. Bei der Durchführung dieses Verfahrens wird während des Schaltvorgangs das Kupplungsmoment dann angehoben, wenn der Zielgang eingelegt ist und die Motordrehzahl im Zielbereich liegt.

Vorzugsweise wird bei diesem Verfahren während der Motordrehzahlregelungsphase der vorgegebene Verlauf des Kupplungsmoments zur Berechnung des vorgesteuerten Motordrehmoments genutzt.

Die Motorzieldrehzahl wird zudem für den jeweiligen Schaltvorgang vorzugsweise aus den Raddrehzahlen, aus der Übersetzung des Differentialgetriebes und aus der Übersetzung des neuen bzw. des bisherigen Ganges des Schaltgetriebes berechnet. Alternativ dazu kann die Motorzieldrehzahl auch aus der gemessenen Getriebeeingangsdrehzahl bestimmt werden.

Für den Fall, dass das Motorsteuergerät nur über eine Drehmomentschnittstelle verfügt, kann die das Motorsolldrehmoment bestimmende Motordrehzahlregelung auch durch das Getriebesteuergerät erfolgen. Dabei wird die Steuerung und Regelung des Motordrehmoments vor Beginn und nach Abschluss des Schaltvorgangs von dem Motorsteuergerät durchgeführt, während die Motordrehzahlregelung während des Schaltvorgangs in dem Getriebesteuergerät erfolgt. In diesem Fall wird das Getriebesteuergerät die Motorsolldrehzahl und das Kupplungsistmoment an das Motorsteuergerät übermitteln. Idealerweise wird die Motordrehzahlregelung jedoch im Motorsteuergerät durchgeführt. Je nach beabsichtigter Schnelligkeit des Gangwechsels wird die Motordrehzahl unter Beachtung der oberen bzw. unteren Drehmomentgrenzen des Motors fahrsituationsabhängig auf die Getriebedrehzahl des Zielgangs geführt. Die Vorteile bei der Nutzung des erfindungsgemäßen Verfahrens hängen daher nicht davon ab, welches Steuergerät (Getriebe- oder Motorsteuergerät) für die Motordrehzahlregelung zuständig ist.

Wie erwähnt wird bei der Durchführung dieses Verfahrens das Kupplungsmoment während des Schaltvorgangs dann angehoben, wenn der Zielgang eingelegt ist und die Motordrehzahl im Zielbereich liegt. Dabei liegt die Motordrehzahl im Zielbereich, wenn bei positivem Fahrerwunschdrehmoment die Motordrehzahl größer oder gleich der Getriebeeingangsdrehzahl ist, oder wenn bei negativem Fahrerwunschdrehmoment die Motordrehzahl einen kleineren oder den gleichen Wert hat wie die Getriebeeingangsdrehzahl.

Von der Motordrehzahlregelung wird vorzugsweise dann zur Motordrehmomentsteuerung gewechselt, wenn in der Wiedereinkuppelphase die Drehzahldifferenz zwischen der Motordrehzahl und der Getriebeeingangsdrehzahl aneinander angeglichen sind und das Kupplungsmoment auf das Fahrerwunschdrehmoment sicher angehoben ist.

Hinsichtlich des zu steuernden Kupplungsmomentes ist es von Vorteil, wenn das Kupplungsistmoment in Form eines linearen Verlaufs, eines frei einstellbaren Verlaufs aus einem abgespeicherten Kennfeld oder mit PT1- oder PT2-Charakteristik vorgegeben und auf den aus dem Fahrerwunsch berechneten Zielwert gesteuert wird.

Die zur Berechnung der Motorsolldrehzahl notwendige Zeitspanne vom Beginn des Schaltvorgangs bis zur Drehzahlangleichung von Motor- und Getriebeeingangsdrehzahl wird vorzugsweise aus den aktuellen Gradienten der Motor- und Getriebeeingangsdrehzahl abgeschätzt.

Wenn die abgeschätzte Zeit bis zum Erreichen der Synchrondrehzahl einen vorbestimmten und von dem Fahrerwunschdrehmoment sowie der Einkuppelgeschwindigkeit abhängigen Schwellenwert unterschreitet, wird die Motordrehzahl durch einen in einem Kennfeld definierten Drehzahlverlauf an die Getriebeeingangsdrehzahl angeglichen. In diesem Kennfeld ist vorzugsweise die Soll-Drehzahldifferenz bei einem Schaltvorgang über die während des Schaltvorgangs verstrichene Zeit eingetragen.

Die Motorsolldrehzahl wird während eines Schaltvorgangs gemäß der Erfindung u.a. aus dem Kupplungssolldrehmoment nach der folgenden Gleichung ständig berechnet:

$$\omega_{mot,\,soll,\,neu} = \omega_{mot,soll,\,alt} + \frac{\Delta t}{\Theta_{antr}}\,(M'_{mot} - M_{kup}) \qquad (Gl.\ 1)$$

wobei $\omega_{mot,\,soll,\,neu}$ für die neue Motorsolldrehzahl, $\omega_{mot,\,soll,\,alt}$ für die bisherige Motorsolldrehzahl, $\Theta_{antr}$ für die Summe aller Antriebsträgheitsmomente, $M'_{mot}$ für das Motorschleppmoment und $M_{kup}$ für das Kupplungsmoment steht.

Diese Berechnung wird vorzugsweise in folgendem Regelungsverfahrensablauf durchgeführt:

- Prüfen, ob eine Gangwechselanforderung vorliegt (Schritt 10).
- Sofern eine Gangwechselanforderung vorliegt, Reduzieren des Kupplungs- und des Motormoments (Schritt 20).
- Prüfen, ob Kupplungsschlupf auftritt oder ob die Kupplung ganz geöffnet ist (Schritt 30).
- Wenn kein Kupplungsschlupf vorliegt oder die Kupplung noch nicht ganz geöffnet ist, zurück zu Schritt 20.
- Wenn Kupplungsschlupf stattfindet oder die Kupplung ganz geöffnet ist, Berechnung des Motordrehzahlverlaufs (Schritt 40).
- Durchführung der Kupplungsmomentsteuerung und der Motordrehzahlregelung (Schritt 50).
- Prüfen, ob der Zielgang eingelegt ist und ob die Motordrehzahl im Zielbereich liegt (Schritt 60).
- Wenn der Zielgang noch nicht eingelegt ist und die Motorzieldrehzahl noch nicht erreicht ist, zurück zu Schritt 40.
- Wenn der Zielgang eingelegt ist und die Motorzieldrehzahl erreicht ist, Erhöhung des Kupplungsmoments (Schritt 70).
- Berechen der Motorsolldrehzahl und Durchführung einer Motordrehzahlregelung (Schritt 80).
- Prüfen, ob wieder Kupplungsschlupf auftritt oder ob die Kupplung noch geöffnet ist (Schritt 90).
- Wenn Kupplungsschlupf auftritt oder die Kupplung noch geöffnet ist, zurück zu Schritt 70.
- Wenn die Kupplung nicht mehr geöffnet ist und kein Kupplungsschlupf auftritt, Erhöhung des Kupplungs- und des Motordrehmoments (Schritt 100).

- Feststellen, dass die Kupplung geschlossen und das Fahrerwunschdrehmoment erreicht ist (Schritt 110).

Das erfindungsgemäße Verfahren ist mit einer Reihe von Vorteilen verbunden, die nachfolgend geschildert werden.

Bei der erfindungsgemäßen Motor- und Kupplungsdrehmomentführung bei haftender Kupplung ist das Kupplungsmoment in der Regel größer oder gleich dem Motordrehmoment. Durch die Motordrehmomentsteuerung bei haftender Kupplung wird der gewünschte Verlauf des Antriebsmoments beim Öffnen oder Schließen der Kupplung sicher eingehalten. Zudem wird durch die kombinierte Steuerung von Kupplungsmoment und Motormoment der Zeitpunkt und das Antriebsmoment festgelegt, zu dem während des Auskuppelns ein Kupplungsschlupf erstmalig auftreten darf, um Antriebsstrangschwingungen zu vermeiden.

Ein weiterer Vorteil wird darin gesehen, dass die Motordrehzahlregelung bei schlupfender oder geöffneter Kupplung während des Aus- oder Einkuppelns und des Gangwechsels entweder im Getriebesteuergerät oder im Motorsteuergerät mit der Vorsteuerung des aktuellen Kupplungsistmoments erfolgen kann.

So kann bei schlupfender oder geöffneter Kupplung ein Motordrehzahlverlauf und das aktuelle Kupplungsistmoment von dem Getriebesteuergerät ermittelt und an das Motorsteuergerät übermittelt werden.

Eine solche Vorgehensweise ist vor allen dann vorteilhaft, wenn im Motorsteuergerät die Motordrehzahlregelung mit einer höheren Genauigkeit möglich ist als im Getriebesteuergerät. Dies ist durchweg der Fall, da dort eine größere Anzahl von Motorsignalen berücksichtigt wird und in kürzeren Zeitabständen Eingriffsmöglichkeiten bestehen. Zudem wird durch die Übermittlung des Kupplungsistmomentes eine Störgößenaufschaltung möglich, wodurch eine höhere Regelgüte erzielbar ist.

Ein zusätzlicher Vorteil der Erfindung besteht darin, dass die Vorgabe des Motordrehzahlverlaufs angepasst an die gewünschte Schaltgeschwindigkeit und an das Fahrerwunschdrehmoment erfolgen kann. Insbesondere bei Rückschaltungen wird dadurch vermieden, dass das Motormoment unnötig früh angehoben wird, obwohl die Aktuatorik des Getriebes das Einlegen des neuen Ganges noch nicht abgeschlossen hat. Darüber hinaus ist es möglich, bei Rückschaltungen im Schubbetrieb (etwa beim Anhalten oder Bremsen) ein unnötiges Zwischengas-Geben zu vermeiden und auf diese Weise Kraftstoff einzusparen.

Zudem wird es als vorteilhaft angesehen, dass bei einer Rückschaltung mit Beschleunigungswunsch des Fahrers das Kupplungsmoment erst dann erhöht wird, wenn die Motordrehzahl größer oder gleich der Getriebedrehzahl des Zielgangs ist. Es findet daher eine Motordrehzahlanhebung durch den Motordrehzahlregler statt. Auf diese Weise wird eine nicht beabsichtigte Fahrzeugverzögerung durch zu frühes Einkuppeln vermieden.

Außerdem findet bei einer Rückschaltung mit Verzögerungswunsch des Fahrers (z. B. bei Bergabfahrt, bei Bremsbetätigung oder beim Ausrollen) keine Motordrehzahlanhebung durch den Motordrehzahlregler statt. Nur wenn sich bei sehr geringer Fahrzeugverzögerung nicht tolerierbar lange Einkuppelzeiten einstellen, wird eine abgestimmt langsame Drehzahlanhebung durchgeführt. Durch dieses Vorgehen ist erreichbar, dass die vom Fahrer gewünschte Fahrzeugverzögerung nach dem Einlegen des neuen Ganges umgehend durchgeführt wird, wodurch ein unnötig hoher Schadstoffausstoß durch unterlassen der Motordrehzahlanhebung vermieden wird.

Schließlich kann durch eine Berücksichtigung der trägen Masse des Antriebs im haftenden Zustand der Kupplung durch die Transformation auf die Antriebsachse erreicht werden, dass insbesondere in niedrigen Gängen beim Übergang von Gleitreibung zu Haftreibung an der Kupplung ein harmonischer und monotoner Beschleunigungsablauf erzielbar ist.

Zum besseren Verständnis eines Ausführungsbeispiels der Erfindung ist der Beschreibung eine Zeichnung beigefügt. In dieser zeigt

Fig. 1    eine prinzipielle Darstellung eines Fahrzeugantriebsstranges,

Fig. 2    einen Programmablaufplan zur Durchführung des Verfahrens mit Hilfe eines Fahrzeugcomputers,

Fig. 3    den Verlauf der Motor- und der Getriebeeingangsdrehzahl während einer Zug-Hochschaltung,

Fig. 4    den Verlauf des Drehmomentwunsches des Fahrers sowie des Motor- und Kupplungsmoments während einer Zug-Hochschaltung,

Fig. 5    den Verlauf der Motor- und der Getriebeeingangsdrehzahl während einer Schub-Hochschaltung,

Fig. 6    den Verlauf des Drehmomentwunsches des Fahrers sowie des Motor- und des Kupplungsmoments während einer Schub-Hochschaltung,

Fig. 7    den Verlauf der Motor- und Getriebeeingangsdrehzahl während einer Zug-Rückschaltung mit Motordrehmomenterhöhung,

Fig. 8    den Verlauf des Drehmomentwunsches des Fahrers sowie des Motor- und Kupplungsmoments während einer Zug-Rückschaltung mit Motordrehmomenterhöhung,

Fig. 9    den Verlauf der Motor- und Getriebeeingangsdrehzahl während einer Schub-Rückschaltung ohne Motordrehmomenterhöhung,

Fig. 10   den Verlauf des Drehmomentwunsches des Fahrers sowie des Motor- und des Kupplungsmoments während einer Schub-Rückschaltung ohne Motordrehmomenterhöhung,

Fig. 11   den Verlauf der Motorsolldrehzahl und der Getriebeeingangsdrehzahl während einer Zug-Hochschaltung mit Sportcharakter,

Fig. 12   den Verlauf der Motorsolldrehzahl und der Getriebeeingangsdrehzahl während einer Zug-Hochschaltung mit Komfortcharakter,

Fig. 13   den Verlauf der Motorsolldrehzahl und der Getriebeeingangsdrehzahl während einer Schub-Hochschaltung mit Komfortcharakter,

Fig. 14   den Verlauf der Motorsolldrehzahl und der Getriebeeingangsdrehzahl während einer Zug-Rückschaltung mit Sportcharakter,

Fig. 15   den Verlauf der Motorsolldrehzahl und der Getriebeeingangsdrehzahl während einer Zug-Rückschaltung mit Komfortcharakter,

Fig. 16   den Verlauf der Motorsolldrehzahl und der Getriebeeingangsdrehzahl während einer Schub-Rückschaltung mit Komfortcharakter,

Fig. 17   den Abbau des Kupplungsmomentes beim Auskuppeln mit unterschiedlichen Steuerungsfunktionen, und

Fig. 18   den Aufbau des Kupplungsmomentes beim Einkuppeln mit unterschiedlichen Steuerungsfunktionen.

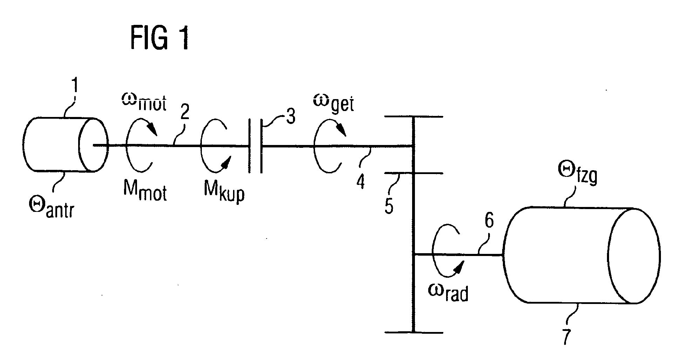

Fig. 1 zeigt demnach eine schematische Darstellung eines Fahrzeugantriebsstranges, bei dem von einer Brennkraftmaschine 1 bei einer Motordrehzahl $\omega_{mot}$ ein Antriebsdrehmoment $M_{mot}$ erzeugt wird, welches über dessen Kurbelwelle 2 an die Eingangsseite einer Anfahr- und Schaltkupplung 3 weitergegeben wird. Im geschlossenen Zustand leitet diese Kupplung 3 dieses Drehmoment als Kupplungsmoment $M_{kup}$ über eine Getriebeeingangswelle 4 mit einer Drehzahl $\omega_{get}$ zu Übersetzungsstufen eines Getriebes 5 weiter, das in dieser vereinfachten Darstellung ein automatisiertes Schaltgetriebe samt Differentialgetriebe umfasst. Von dort wird das Antriebsdrehmoment an Achsantriebswellen 6 des Fahrzeugs 7 weitergegeben, die letztlich die hier nicht dargestellten Fahrzeugräder mit einer Raddrehzahl $\omega_{rad}$ antreiben. $\Theta_{antr}$ stellt dabei die Summe aller Antriebsträgheitsmomente und $\Theta_{fzg}$ die Summe aller restlichen Fahrzeugträgheitsmomente dar.

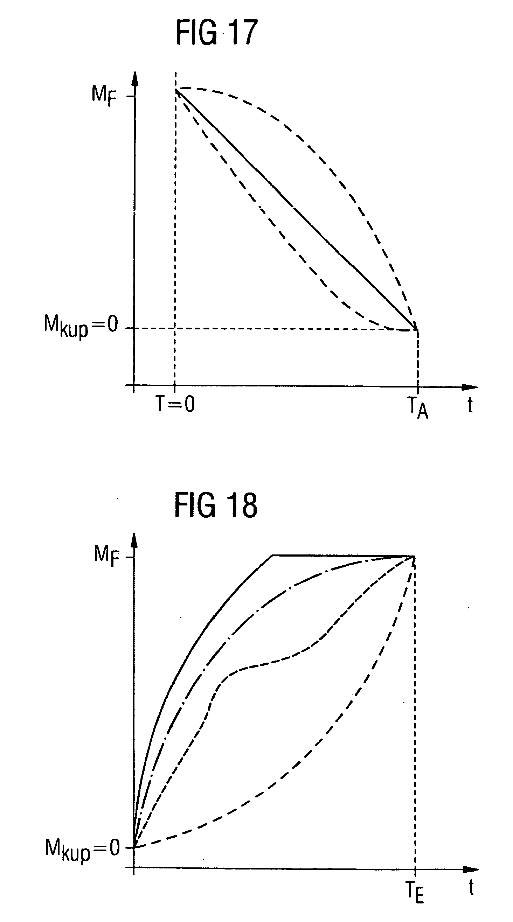

Zur Steuerung des Schaltablaufs wird das Kupplungsistmoment für den jeweiligen Schaltvorgang in Form einer Geraden, eines frei einstellbaren Verlaufs aus einem Kennfeld oder mit PT1- bzw. mit PT2-Charakteristik auf den aus dem Wunschdrehmoment des Fahrers berechneten Zielwert gesteuert (s.a. Fig. 17 und Fig. 18).

Der Zeitraum bis zum Erreichen der Zieldrehzahl bzw. der Synchrondrehzahl wird vorzugsweise aus den aktuellen Gradienten der Motordrehzahl $\omega_{mot}$ und der Getriebeeingangsdrehzahl $\omega_{get}$ abgeschätzt. Wenn dieser Zeitraum einen kalibrierten und von dem Fahrerwunschdrehmoment $M_{soll}$ sowie der Einkuppelgeschwindigkeit abhängenden Schwellenwert unterschreitet, wird die Motordrehzahl $\omega_{mot}$ durch einen in einem Kennfeld definierten Drehzahlverlauf an die Getriebeeingangsdrehzahl $\omega_{get}$ angeblichen. In diesem Kennfeld ist vorzugsweise die Soll-Drehzahldifferenz über die verstrichene Zeit t eingetragen.

Anschließend erfolgt die Berechnung des Motordrehzahlverlaufes, bei dem für Zeitintervalle $\Delta t$ jeweils aktuelle Motordrehzahlsollwerte $\omega_{mot, soll, neu}$ ermittelt werden. Bei Zug-Rückschaltungen sowie bei Schub-Hochschaltungen sind die Motordrehzahl $\omega_{mot}$ und die Getriebeeingangsdrehzahl $\omega_{get}$ in der Regel weitgehend synchron, so dass die Motorsolldrehzahl und die Getriebeeingangsdrehzahl ausreichend genau übereinstimmen.

Zumindest bei Zug-Hochschaltungen und Schub-Rückschaltungen wird die Motorsolldrehzahl $\omega_{mot, soll, neu}$ aus dem aktuellen Kupplungssollmoment wie folgt berechnet:

$$\omega_{mot,\ soll,\ neu} = \omega_{mot,\ soll,\ alt} + \frac{\Delta t}{\Theta_{antr}} (M'_{mot} - M_{kup}) \qquad (Gl.\ 2)$$

mit $\omega_{mot,\ soll,\ neu}$ für die neue Motorsolldrehzahl, $\omega_{mot,\ soll,\ alt}$ für die bisherige Motorsolldrehzahl, $\Theta_{antr}$ für die Summe aller Antriebsträgheitsmomente, $M'_{mot}$ für das Motorschleppmoment und $M_{kup}$ für das Kupplungssollmoment. Der Wert für das Motorschleppmoment $M'_{mot}$ beträgt im Falle einer Zug-Hochschaltung typischerweise ca. 30 Nm.

Während des Einkuppelvorgangs tritt üblicherweise ein Übergang von einer gleitenden zu einer haftenden Reibung an der Kupplung auf. Dieser Übergang ist für die Realisierung eines ruckfreien Beschleunigungsverlaufes von besonderer Bedeutung. Die Fahrzeugbeschleunigung $a_{fzg}$, die die Zielgröße des Einkuppelvorgangs darstellt, ist im Normalfall proportional zur Radbeschleunigung $\dot{\omega}_{rad}$ und damit unter Berücksichtigung der Gesamtübersetzung von Schaltgetriebe und Differentialgetriebe ebenfalls proportional zur Beschleunigung der Getriebeeingangswelle $\dot{\omega}_{get}$:

$$a_{fzg} \approx \dot{\omega}_{rad} \approx \dot{\omega}_{get} \qquad (Gl.\ 3)$$

Dies bedeutet, dass ein ruckfreier Übergang zwischen Gleit- und Haftreibung an der Kupplung 3 erzielt wird, wenn das Motormoment $M_{mot}$ und das Kupplungsmoment $M_{kup}$ in der Art geführt werden, dass zu diesem Zeitpunkt die Beschleunigung der Getriebeeingangswelle 4 ebenfalls monoton verläuft.

Bei schlupfender Kupplung gilt folgende Beziehung:

$$M_{kup} = \Theta^*_{fzg} \cdot \dot{\omega}_{get}\ , \qquad (Gl.\ 4)$$

wobei $\Theta^*_{fzg}$ das auf die Getriebeeingangsseite bezogene Trägheitsmoment $\Theta_{fzg}$ aller rotierenden Bauteile des Antriebsstranges von der Kupplung 3 bis zu den Fahrzeugrädern inklusive der in ein äquivalentes Trägheitsmoment umgerechneten Fahrzeugmasse ist.

Das resultierende transformierte Trägheitsmoment an der Getriebeeingangswelle 4 ist abhängig von der Gesamtübersetzung ü von Schaltgetriebe und Differentialgetriebe und ändert sich je nach eingelegtem Gang:

$$\Theta^*_{fzg} = \Theta_{fzg} \left[\frac{\omega_{rad}}{\omega_{get}}\right]^2 = \Theta_{fzg} \cdot \frac{1}{\ddot{u}^2} \qquad (Gl.\ 5)$$

Bei haftender Kupplung gilt folgende Bewegungsgleichung

$$M_{soll} = (\Theta^*_{fzg} + \Theta_{antr})\ \dot{\omega}_{get}\ , \qquad (Gl.\ 6)$$

worin $\Theta_{antr}$ die Summe aller antriebsseitigen Trägheitsmomente ist und $M_{soll}$ das Fahrerwunschdrehmoment, welches durch den Antriebsmotor 1 bereitgestellt wird.

Ein ruckfreier Beschleunigungswunsch ergibt sich, wenn folgende Beziehung gilt:

$$\dot{\omega}_{get} = \frac{M_{kup}}{\Theta^*_{fzg}} = \frac{M_{soll}}{\Theta^*_{fzg} + \Theta_{antr}} \qquad (Gl.\ 7)$$

Daher sollte zumindest beim Wiedereinkuppeln während der Schlupfphase das Kupplungsmoment nicht exakt

bis zum Fahrerwunschmoment $M_{soll}$ gesteuert werden, sondern nur bis zu folgendem Wert, der immer etwas unter dem Fahrerwunschmoment $M_{soll}$ liegt:

$$M_{kup} = M_{soll} \frac{\Theta^*_{fzg}}{\Theta^*_{fzg} + \Theta_{antr}} \qquad\qquad (Gl.\ 8)$$

Diese Korrektur ist insbesondere bei niedrigen Gängen verbunden mit einem dann sehr großen Übersetzungsverhältnis ü wichtig, da dann das auf die Getriebeeingangsseite transformierte Trägheitsmoment $\Theta^*_{fzg}$ besonders klein im Verhältnis zum antriebsseitigen Trägheitsmoment $\Theta_{antr}$ wird. In hohen Gängen wird diese Korrektur zunehmend weniger spürbar, da dann das antriebsseitige Trägheitsmoment $\Theta_{antr}$ sehr klein im Verhältnis zum abtriebsseitigen Trägheitsmoment $\Theta^*_{fzg}$ wird.

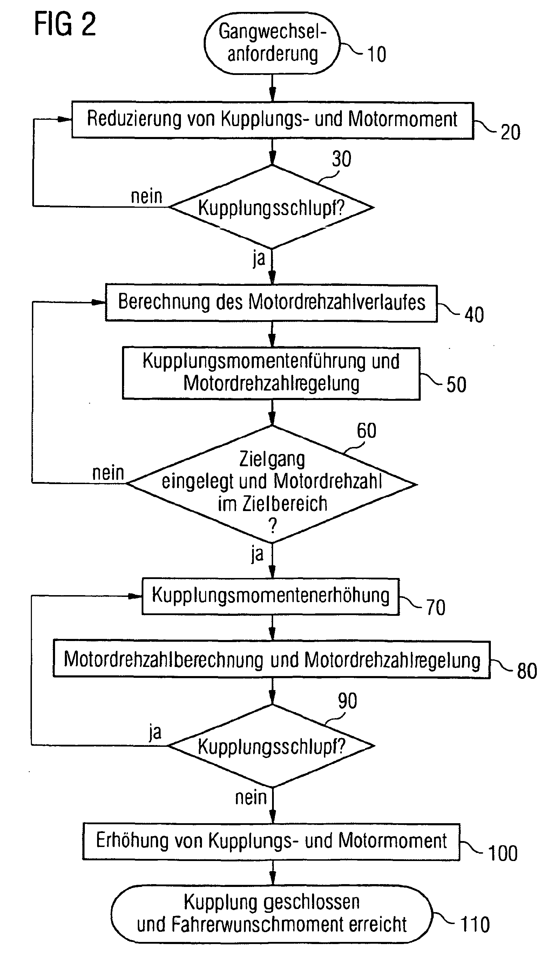

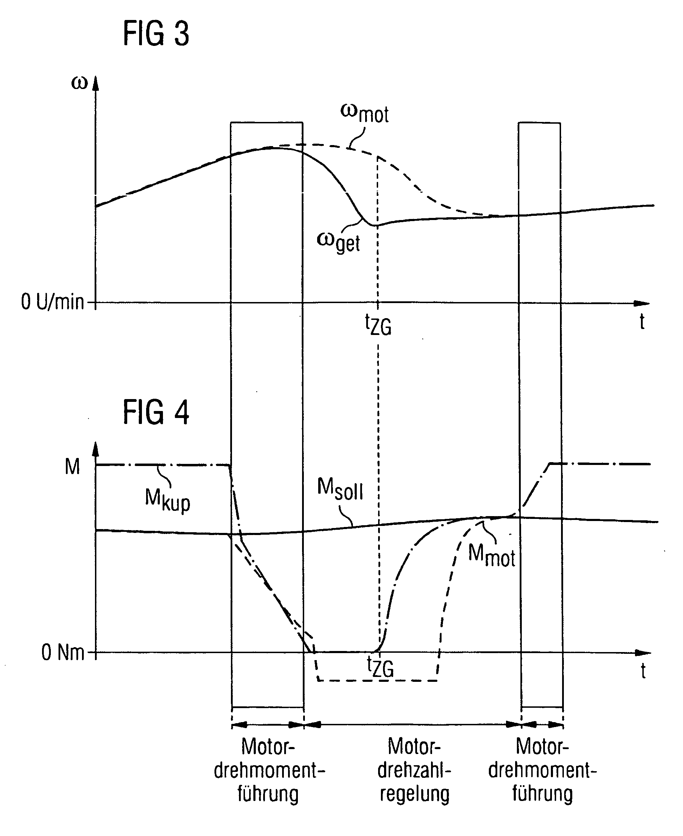

Wie Fig. 2 anhand eines Ablaufplans für ein in einem Fahrzeugcomputer abzulegendes Steuerungs- und Regelungsprogramm sowie Fig. 3 und Fig. 4 hinsichtlich des zeitlichen Verlaufs von Motordrehzahl $\omega_{mot}$, Getriebeeingangsdrehzahl $\omega_{get}$, Motordrehmoment $M_{mot}$ und Kupplungsmoment $M_{kup}$ bei einem Zug-Hochschaltvorgang entnehmbar ist, wird gemäß der Erfindung bei einem Getriebeschaltvorgang zunächst eine Motordrehmomentsteuerung, danach eine Motordrehzahlregelung und abschließend wieder eine Motordrehmomentsteuerung durchgeführt.

Vorzugsweise wird die Motordrehmomentführung vor und in der ersten Phase des Gangwechsels von einem Motorsteuerungsgerät vorgenommen. Ein Getriebesteuerungsgerät prüft währenddessen in einem ersten Verfahrensschritt 10 in engen zeitlichen Abständen, ob ein durch das Verhalten des Fahrers signalisierter Gangwechselwunsch vorliegt. Diese Gangwechselanforderung kann durch Sensoren an einer Getriebeschaltvorrichtung und/oder durch das Getriebesteuergerät selbst erzeugt werden, wenn dieses aufgrund anderer Sensorinformationen selbsttätig zu dem Ergebnis kommt, dass der Fahrer eine automatisch ausgelöste Gangschaltung wünscht.

Sofern also in diesem ersten Verfahrensschritt 10 eine Gangwechselanforderung festgestellt wurde, wird gemäß dem Ablaufplan in Fig. 2 in einem zweiten Verfahrensschritt 20 das Kupplungs- und das Motordrehmoment $M_{kup}$, $M_{mot}$ reduziert. Dieser Steuerungsablauf ist in Fig. 3 und Fig. 4 graphisch als der Bereich gekennzeichnet, in dem während des Schaltvorgangs eine Motordrehmomentführung erfolgt.

Während dieser Phase der Reduzierung des Kupplungs- und Motormomentes $M_{kup}$, $M_{mot}$ wird beispielsweise durch das Getriebesteuergerät in einem Verfahrensschritt 30 ständig geprüft, ob Kupplungsschlupf auftritt oder die Kupplung ganz geöffnet ist. Wenn kein Kupplungsschlupf vorliegt bzw. wenn die Kupplung noch nicht ganz geöffnet ist, wird das Motordrehmoment $M_{mot}$ und das Kupplungsmoment $M_{kup}$ weiter reduziert.

Sofern das Getriebesteuerungsgerät Kupplungsschlupf oder eine geöffnete Kupplung feststellt, wird in einem nächsten Verfahrensschritt 40 der Motordrehzahlverlauf vorzugsweise nach den oben geschilderten mathematischen Zusammenhängen berechnet. Unmittelbar danach erfolgt in einem Verfahrensschritt 50 eine Kupplungsmomentführung sowie eine Motordrehzahlregelung derart, dass gemäß Fig. 3 die Motordrehzahl mit dem berechneten Verlauf auf eine Zielmotordrehzahl geregelt reduziert wird.

Diese Zieldrehzahl entspricht dabei der Getriebeeingangsdrehzahl $\omega_{get}$ unter Berücksichtigung des Übersetzungsverhältnisses des Zielgangs und der Fahrzeugraddrehzahl $\omega_{rad}$ bei der aktuellen Fahrzeuggeschwindigkeit oder kommt dieser zumindest nahe.

Während dieser Phase der Motordrehzahlregelung prüft beispielsweise das Getriebesteuergerät in einem Verfahrensschritt 60 ständig, ob der Zielgang eingelegt ist und ob sich die Motordrehzahl $\omega_{mot}$ im oben erwähnten Zielbereich befindet. Wenn sowohl der Zielgang im Getriebe 5 mechanisch eingelegt ist als auch die Motordrehzahl $\omega_{mot}$ in dem vorbestimmten Zieldrehzahlbereich liegt, wird ab einem Zeitpunkt $t_{ZG}$ in einem Verfahrensschritt 70 durch allmähliches Schließen der Kupplung 3 solange eine Erhöhung des Kupplungsmomentes $M_{kup}$ vorgenommen, bis das Wunschdrehmoment $M_{soll}$ des Fahrers erreicht ist (Fig. 4).

In diesem Abschnitt des Schaltvorgangs wird vorzugsweise von dem Getriebesteuergerät bei langsam steigendem Kupplungsmoment $M_{kup}$ in einem Verfahrensschritt 80 ständig die Motordrehzahl $\omega_{mot,\ soll,\ neu}$ erneut ermittelt und eine auf die Erreichung der Zielmotordrehzahl gerichtete Motordrehzahlregelung durchgeführt. Dabei wird in einem Verfahrensschritt 90 geprüft, ob noch Kupplungsschlupf auftritt bzw. ob die Kupplung noch geöffnet ist.

Sofern wie am Anfang des Schaltvorgangs (Verfahrensschritt 30) noch Kupplungsschlupf stattfindet oder die Kupplung 3 noch ganz geöffnet ist, wird dies als Hinweis darauf gewertet, dass die Kupplung 3 noch kein oder zumindest noch kein wesentliches Drehmoment $M_{kup}$ an das Getriebe weiterleitet. Daher wird gemäß Fig. 2 zu dem Verfahrensschritt 70 zurückverzweigt und mit der Erhöhung des Kupplungsmomentes $M_{kup}$ durch Schließen der Kupplung 3 unter ständiger Motordrehzahlberechnung und Motordrehzahlregelung fortgefahren.

Sofern im Verfahrensschritt 90 festgestellt wurde, dass kein Kupplungsschlupf mehr auftritt oder die Kupplung nicht mehr geöffnet ist, wird anschließend in einem Verfahrensschritt 100 die Kupplung 3 vollständig geschlossen und das Kupplungsmoment $M_{kup}$ sowie das Motormoment $M_{mot}$ soweit angehoben, bis das Wunschdrehmoment $M_{soll}$ des

Fahrers erreicht ist. Durch das Feststellen des Erreichens des genannten Wunschdrehmomentes $M_{soll}$ in einem Verfahrensschritt 110 wird der Schaltvorgang als abgeschlossen betrachtet und von der Motordrehzahlregelung auf eine Motordrehmomentsteuerung übergegangen, wobei letztere vorzugsweise wieder von dem Motorsteuerungsgerät vorgenommen wird.

Dieses Prinzip des Wechsels von Motordrehzahlregelung und Motordrehmomentsteuerung während eines Schaltvorgangs ist auch bei allen anderen beliebigen Getriebeschaltvorgängen mit vielen Vorteilen anwendbar.

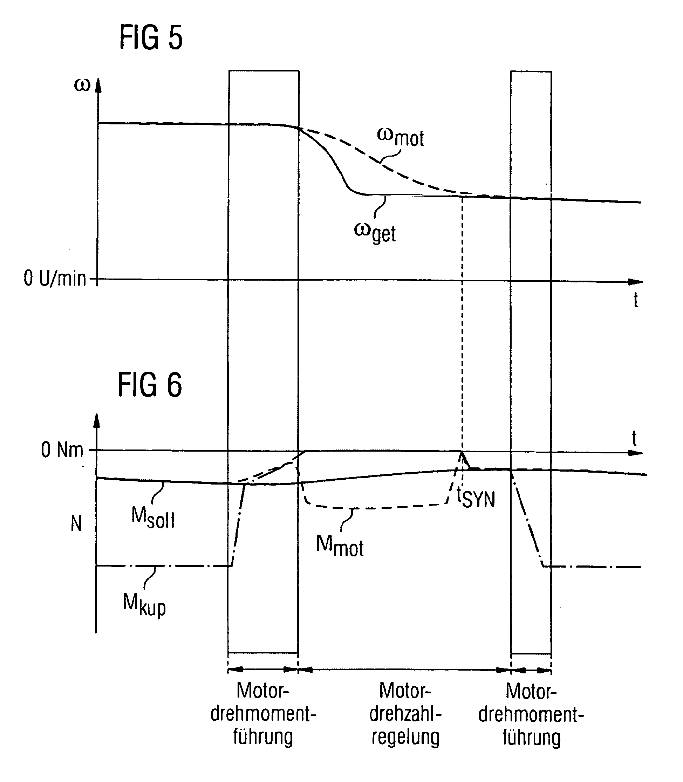

So zeigt Fig. 5 und Fig. 6 einen Hochschaltvorgang im Fahrzeugschubbetrieb, bei dem vor Beginn des Hochschaltvorgangs ein negatives Kupplungsmoment $M_{kup}$ an der Kupplung 3 anliegt und das Motordrehmoment $M_{mot}$ dem Wunschdrehmoment $M_{soll}$ des Fahrers entspricht. Mit dem Öffnen der Kupplung 3 steigt das Kupplungsmoment $M_{kup}$ zu einem Wert von Null an, wobei die Getriebeeingangsdrehzahl $\omega_{get}$ abfällt.

Sobald das Getriebesteuerungsgerät feststellt, dass wegen der sich öffnenden Kupplung 3 diese zu schlupfen beginnt, findet ein Wechsel von der bis dahin durchgeführten Motordrehmomentsteuerung zu einer Motordrehzahlregelung statt, bei der der Motordrehzahlverlauf während des Schaltvorgangs ständig neu errechnet und die Motordrehzahl $\omega_{mot}$ nach diesem errechneten Verlauf geregelt sowie das Kupplungsmoment $M_{kup}$ gesteuert wird. Dementsprechend fällt das Motordrehmoment $M_{mot}$ während der Motordrehzahlregelungsphase bei sinkender Motordrehzahl $\omega_{mot}$ weiter ab, um ab einem Zeitpunkt $t_{SYN}$ bei Angleichung von Motordrehzahl $\omega_{mot}$ und Getriebeeingangsdrehzahl $\omega_{get}$ auf das Wunschdrehmoment $M_{soll}$ des Fahrers abzufallen. Sobald diese Angleichungsphase abgeschlossen ist, schaltet das Getriebesteuerungsgerät von Motordrehzahlregelung auf Motordrehmomentsteuerung um, so dass das Motordrehmoment $M_{mot}$ nach dem Ende des Schaltvorgangs erneut auf einen den Fahrzeugvortrieb bremsenden negativen Wert abfallen kann.

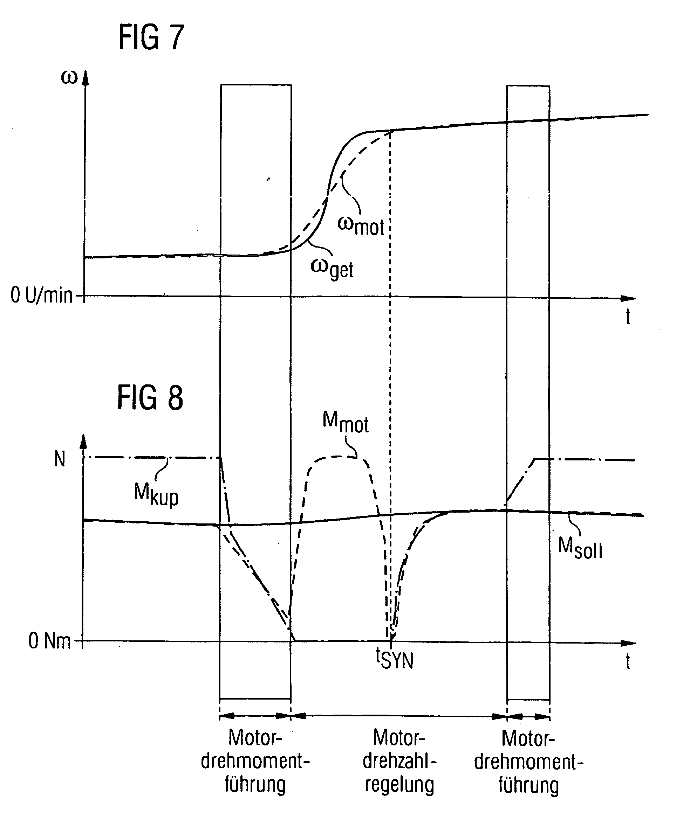

Bei der in Fig. 7 und in Fig. 8 dargestellten Gangrückschaltung im Zugbetrieb des Fahrzeuges ist die Motordrehzahl $\omega_{mot}$ anzuheben, während die Getriebeeingangsdrehzahl $\omega_{get}$ durch die Betätigung der Synchronisationsvorrichtung ansteigt. Ausgehend von einem positiven Kupplungsmoment $M_{kup}$ wird zu Beginn des Schaltvorgangs parallel zum Öffnen der Kupplung 3 das Motordrehmoment $M_{mot}$ heruntergesteuert. Auch hier wird mit dem Feststellen des Schlupfens der Kupplung 3 von der Motordrehmomentsteuerung zur Motordrehzahlregelung gewechselt, so dass noch bevor die Kupplung 3 kein Drehmoment mehr überträgt die Motordrehzahl $\omega_{mot}$ bis zum Erreichen der Zielmotordrehzahl (Synchrondrehzahl) angehoben wird. Damit einher geht ein Anstieg des Motordrehmoments $M_{mot}$, das jedoch mit der Rücknahme des "Zwischengas" auf Null abfällt.

Ab dem Zeitpunkt $t_{SYN}$ des Erreichens der Zielmotordrehzahl wird dann auf Befehl des beispielsweise Getriebesteuergeräts die Kupplung 3 stetig geschlossen und das Motordrehmoment $M_{mot}$ angehoben, bis dieses Motordrehmoment $M_{mot}$ das Wunschdrehmoment $M_{soll}$ des Fahrers erreicht hat. Anschließend erfolgt ein Wechsel von der Motordrehzahlregelung zur Motordrehmomentsteuerung, die dann vorzugsweise wieder das Motorsteuerungsgerät durchführt. In deren Folge kann das Kupplungsmoment $M_{kup}$ weiter ansteigen, während das Motordrehmoment $M_{mot}$ dem durch die Auslenkung des Fahrpedals signalisierten Wunschdrehmoment $M_{soll}$ entspricht.

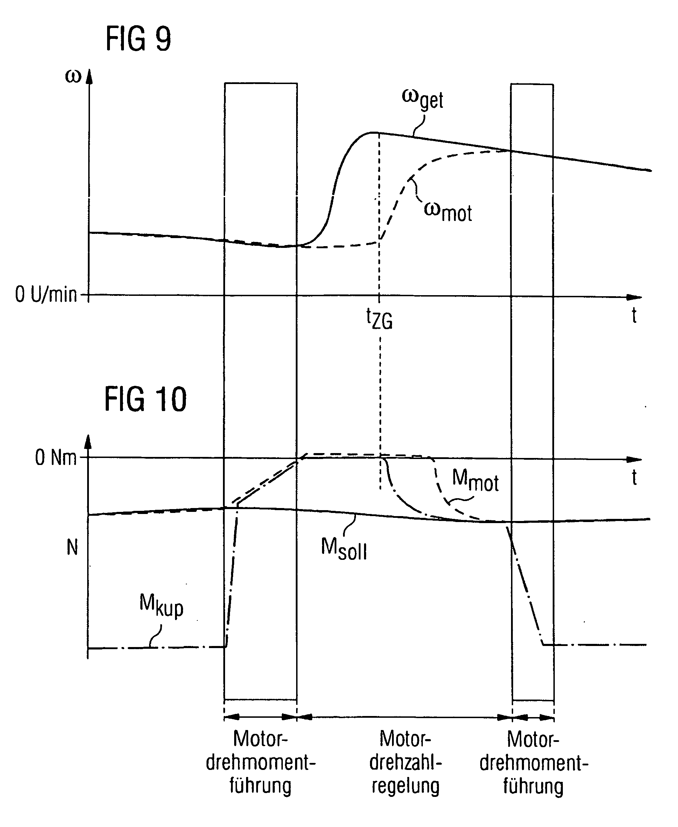

Schließlich zeigt Fig. 9 den zeitlichen Verlauf der Motordrehzahl $\omega_{mot}$ und der Getriebeeingangswellendrehzahl $\omega_{get}$ sowie Fig. 10 den Verlauf des Wunschdrehmoments $M_{soll}$ des Fahrers, des Kupplungsmoments $M_{kup}$ und des Motordrehmoments $M_{mot}$ während eines Rückschaltvorgangs im Schubbetrieb ohne Motordrehmomenterhöhung. Wie insbesondere Fig. 10 entnehmbar ist, liegt an der Kupplung 3 vor dem Schaltvorgang ein negatives Kupplungsmoment $M_{kup}$ an, das zu Beginn des Schaltvorgangs mit dem Öffnen der Kupplung 3 zu einem Wert von Null abgebaut wird.

Zudem ist erkennbar, dass das vor Beginn des Schaltvorgangs negative Motordrehmoment $M_{mot}$ auf einen Wert nahe Null abfällt, da der Motor 1 während dieses Rückschaltvorgangs bei geöffneter Kupplung 3 nicht mehr bremsend auf den Antriebsstrang einwirkt. Auch in dieser Schaltsituation ist zunächst eine Motordrehmomentsteuerung aktiv, die nach dem Erkennen des Schlupfens oder bei geöffneter Kupplung 3 von einer Motordrehzahlregelung abgelöst wird.

Sobald die Kupplung 3 schlupft steigt die Drehzahl $\omega_{get}$ der Getriebeeingangswelle 4 stark an, da diese nicht mehr von dem Motor 1 über die Kupplung 3 festgehalten und von den Fahrzeugrädern über das Getriebe 5 angetrieben wird. Wenn im Zeitpunkt $t_{ZG}$ der Zielgang im Getriebe 5 mechanisch eingelegt ist, wird das Kupplungsmoment vorzeichenbezogen reduziert (betragsmäßig erhöht), so dass die Getriebeeingangsdrehzahl $\omega_{get}$ wieder absinkt.

Gleichzeitig steigt die Motordrehzahl $\omega_{mot}$ an, da durch das Schließen der Kupplung 3 der Motor 1 über das Getriebe 5 angetrieben wird. Das Motormoment $M_{mot}$ fällt nach und nach bis auf das negative Wunschdrehmoment $M_{soll}$ ab, das etwa dann erreicht ist, wenn die Motordrehzahl $\omega_{mot}$ der Zieldrehzahl der Getriebeeingangswelle $\omega_{get}$ entspricht.

Abschließend wird dann von dem Getriebesteuerungsgerät der Befehl zum vollständigen Schließen der Kupplung 3 abgegeben und von der Motordrehzahlregelung auf die Motordrehmomentsteuerung umgeschaltet, in deren Folge das Kupplungsmoment $M_{kup}$ auf den Wert vor dem Schaltvorgangsbeginn abfällt.

Bei den vorgenannten Getriebeschaltvorgängen erfolgt die Motordrehzahlregelung anhand von berechneten Motordrehzahl-Sollwerten. Diese Sollwertvorgaben können davon abhängen, welche Schaltgeschwindigkeit gewünscht ist. So können in dem selben Fahrzeug in Abhängigkeit von den jeweiligen Fahrsituationen oder in Abhängigkeit von unterschiedlichen Fahrern sportlich schnelle oder aber auch komfortable und etwas langsamere Schaltvorgänge gewünscht sein.

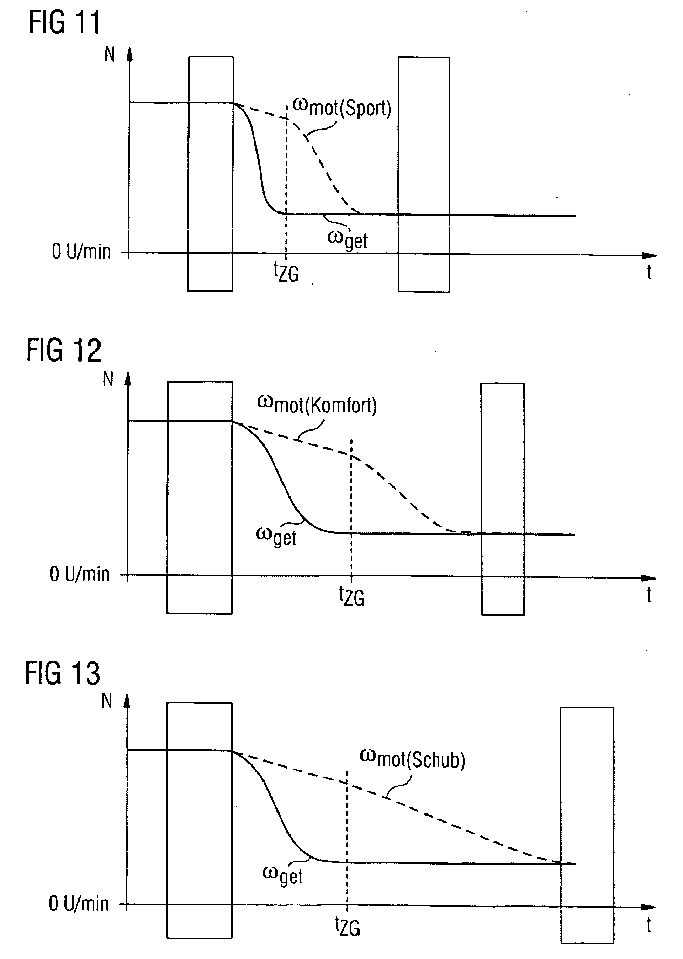

Fig. 11 zeigt beispielhaft den Verlauf der Getriebeeingangsdrehzahl $\omega_{get}$ und der Motorsolldrehzahl $\omega_{mot}$ bei einem sportlichen Hochschaltvorgang, während Fig. 12 diese Verläufe bei einem komfortablen Hochschaltvorgang und Fig. 13 bei einer Schubrückschaltung darstellt. Wie ein Vergleich dieser Figuren zeigt, sind für diese Schaltvorgänge unterschiedliche Sollwertverläufe der Motordrehzahl $\omega_{mot}$ errechnet worden, die zu verschieden langen Schaltzeiträumen führen.

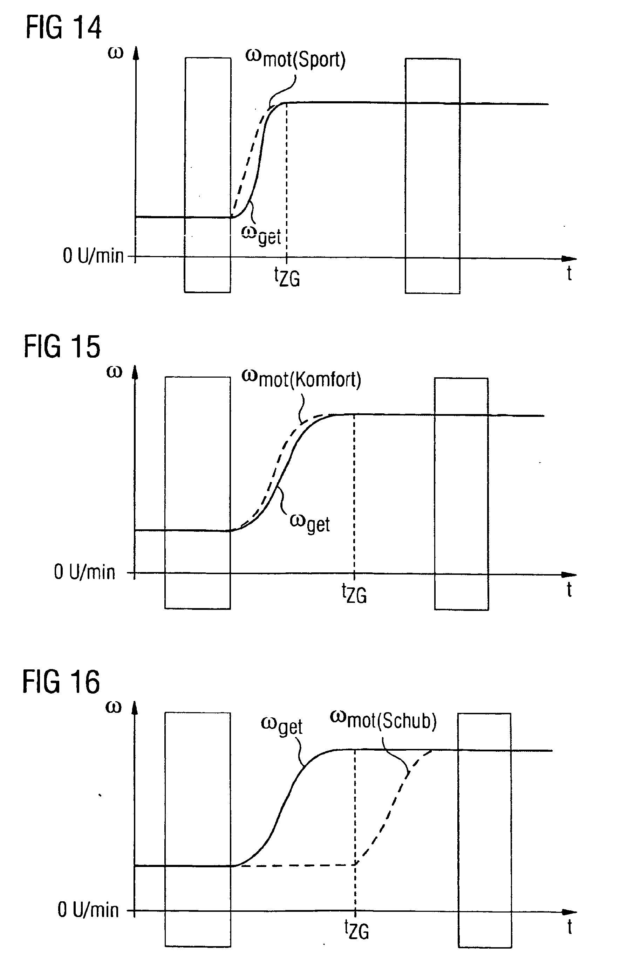

Zudem sind in Fig. 14, Fig. 15 und Fig. 16 unterschiedliche Sollwertverläufe der Motordrehzahl $\omega_{mot}$ während verschiedener Rückschaltvorgänge dargestellt. So zeigt Fig. 14 den Verlauf der Motorsolldrehzahl $\omega_{mot}$ während einer Zug-Rückschaltung mit sportlichem Charakter, während Fig. 15 eine Zug-Rückschaltung mit Komfort-Charakter entnehmbar ist. Schließlich ist in Fig. 16 eine Komfort-Schub-Rückschaltung dargestellt, deren Motorsolldrehzahlverlauf zu einer noch etwas längeren Schaltzeit führt.

Die in den Figuren 11 bis 16 dargestellten Drehzahlverläufe machen deutlich, dass durch die Motordrehzahlregelungsphase während des Schaltvorgangs mit dem erfindungsgemäßen Verfahren sehr vorteilhaft auf unterschiedliche Schaltwünsche und Fahrbetriebsbedingungen sehr individuell reagiert werden kann.

Darüber hinaus bietet die Erfindung die Möglichkeit, den Verlauf des Kupplungsistmomentes in Form einer Geraden, eines frei einstellbaren Verlaufes aus einem Kennfeld oder mit PT1-bzw. mit PT2-Charakteristik im Hinblick auf den aus dem Fahrerwunschdrehmoment berechneten Zielwert zu steuern. So zeigt Fig. 17 die genannten unterschiedlichen Verläufe des Kupplungsmomentes beim Öffnen der Kupplung 3 vom Zeitpunkt T=0, bei dem die Schaltung angefordert wird, bis zum Zeitpunkt $T_A$, bei dem tatsächlich ausgekuppelt ist.

Fig. 18 zeigt schließlich unterschiedliche Verläufe des Kupplungsistmomentes von einem Zeitpunkt $T_A$ bei geöffneter Kupplung 3 bis zu einem Zeitpunkt $T_E$, bei dem die Kupplung 3 wieder geschlossen und das Wunschdrehmoment $M_{soll}$ des Fahrers durch die Kupplung 3 übertragen wird. Aus diese Darstellung wird deutlich, dass die Steuerung des Kupplungsmomentes während des Schaltvorgangs durch entsprechende Vorgaben beliebig gestaltet werden kann.

**Patentansprüche**

1. Verfahren zur Steuerung und Regelung des Kupplungs- und Motordrehmoments während eines Schaltvorgangs eines automatisierten Schaltgetriebes oder eines Doppelkupplungsgetriebes, folgende Schritte umfassend:

   a) Steuern des Motordrehmoments;
   b) Bestimmen, dass eine Gangwechselanforderung vorliegt;
   c) Verringern des Kupplungsmoments und des Motormoments;
   d) Beenden der Steuerung des Motordrehmoments, sobald ein Kupplungsschlupf stattfindet, oder die Kupplung ganz geöffnet ist;
   e) Regeln der Motordrehzahl auf einen vorbestimmten Abstand zur Getriebeeingangsdrehzahl (Synchrondrehzahl) des Zielgangs;
   f) Bestimmen, dass der Zielgang eingelegt ist und die Motordrehzahl im Zielbereich (Synchrondrehzahl) liegt;
   g) Erhöhen des Kupplungsmoments; und
   h) Beenden der Regelung der Motordrehzahl und Steuern des Motordrehmoments, sobald das Kupplungsmoment ($M_{kup}$) einen für diesen Schaltvorgang bezogenen Endwert erreicht hat,
   i) wobei die Steuerung des Kupplungsmoments während des gesamten Schaltvorgangs erfolgt, und die Motorzieldrehzahl aus den Drehzahlen der Fahrzeugräder ($\omega_{rad}$), der Differentialgetriebeübersetzung und der Getriebeübersetzung errechnet wird.

2. Verfahren nach Anspruch 1, **dadurch gekennzeichnet, dass** während der Motordrehzahlregelung zur Bestimmung der Motorsolldrehzahl ($\omega_{mot, soll}$, neu) und des vorgesteuerten Motordrehmoments ($M_{mot}$) ein vorgegebener Verlauf des Kupplungsmoments ($M_{kup}$) genutzt wird.

3. Verfahren nach Anspruch 1 oder Anspruch 2, **dadurch gekennzeichnet, dass** die Steuerung- und/oder Regelung des Motordrehmoments ($M_{mot}$) vor Beginn des Schaltvorgangs und nach Abschluss des Schaltvorgangs von einem Motorsteuergerät durchgeführt wird.

4. Verfahren nach wenigstens einem der vorherigen Ansprüche, **dadurch gekennzeichnet, dass** die Motordrehzahlregelung während des Schaltvorgangs in einem Getriebesteuergerät erfolgt.

5. Verfahren nach Anspruch 3, **dadurch gekennzeichnet, dass** die Motordrehzahlregelung während des Schaltvorgangs durch das Motorsteuergerät erfolgt.

6. Verfahren nach Anspruch 4 oder Anspruch 5, **dadurch gekennzeichnet, dass** das Getriebesteuerungsgerät dem Motorsteuerungsgerät die Motorsolldrehzahl ($\omega_{mot}$) und/oder das Kupplungsistdrehmoment ($M_{kup}$) übermittelt.

7. Verfahren nach wenigstens einem der vorangehenden Ansprüche, **dadurch gekennzeichnet, dass** die Motordrehzahl ($\omega_{mot}$) dann im Zielbereich liegt, wenn bei positivem Fahrerwunschdrehmoment ($M_{soll}$) die Motordrehzahl ($\omega_{mot}$) größer oder gleich der Getriebeeingangsdrehzahl ($\omega_{get}$) ist, oder wenn bei negativem Fahrerwunschdrehmoment ($M_{soll}$) die Motordrehzahl ($\omega_{mot}$) einen kleineren oder den gleichen Wert hat wie die Getriebeeingangsdrehzahl ($\omega_{get}$).

8. Verfahren nach wenigstens einem der vorherigen Ansprüche, **dadurch gekennzeichnet, dass** dann von der Motordrehzahlregelung zur Motordrehmomentsteuerung gewechselt wird, wenn in einer Wiedereinkuppelphase die Drehzahldifferenz zwischen der Motordrehzahl ($\omega_{mot}$) und der Getriebeeingangsdrehzahl ($\omega_{get}$) zueinander angeglichen sind und das Kupplungsmoment ($M_{kup}$) sicher an das Fahrerwunschdrehmoment ($M_{soll}$) angeglichen ist.

9. Verfahren nach wenigstens einem der vorherigen Ansprüche, **dadurch gekennzeichnet, dass** die Motorzieldrehzahl (Synchrondrehzahl) aus der gemessenen Getriebeeingangsdrehzahl ($\omega_{get}$) ermittelt wird.

10. Verfahren nach wenigstens einem der vorherigen Ansprüche, **dadurch gekennzeichnet, dass** das Kupplungsistdrehmoment in Form eines linearen Verlaufs, eines frei einstellbaren Verlaufs aus einem abgespeicherten Kennfeld, oder mit PT1- bzw. mit PT2-Charakteristik auf den aus dem Fahrerwunschdrehmoment ($M_{soll}$) berechneten Zielwert gesteuert wird.

11. Verfahren nach wenigstens einem der vorherigen Ansprüche, **dadurch gekennzeichnet, dass** aus den aktuellen Gradienten von Motor- und Getriebeeingangsdrehzahl ($\omega_{mot}$, $\omega_{get}$) der Zeitpunkt abgeschätzt wird, in dem die beiden genannten Drehzahlen ($\omega_{mot}$, $\omega_{get}$) vermutlich wieder synchron sind.

12. Verfahren nach Anspruch 11, **dadurch gekennzeichnet, dass** die Motordrehzahl ($\omega_{mot}$) durch einen in einem Kennfeld definierten Drehzahlverlauf an die Getriebeeingangsdrehzahl ($\omega_{get}$) angeglichen wird, wenn die abgeschätzte Zeit bis zum Erreichen der Synchrondrehzahl einen von dem Fahrerwunschdrehmoment ($M_{soll}$) und der Einkuppelgeschwindigkeit abhängigen vorbestimmten Schwellenwert unterschreitet.

13. Verfahren nach Anspruch 12 , **dadurch gekennzeichnet, dass** in dem Kennfeld die Soll-Drehzahldifferenz bei einem Schaltvorgang über die während eines Schaltvorgangs verstrichene Zeit abgespeichert ist.

14. Verfahren nach wenigstens einem der vorherigen Ansprüche, **dadurch gekennzeichnet, dass** die Motorsolldrehzahl ($\omega_{mot,\ soll,\ neu}$) für einen Schaltvorgang wie folgt berechnet wird:

$$\omega_{mot,\ soll,\ neu} = \omega_{mot,\ soll,\ alt} + \frac{\Delta t}{\Theta_{antr}}\ (M'_{mot} - M_{kup}) \qquad (Gl.\ 1)$$

wobei $\omega_{mot,\ soll,\ alt}$ die bisherige Motorsolldrehzahl, $\Delta t$ ein Zeitintervall, $\Theta_{antr}$ die Summe aller Antriebsträgheitsmomente, $M'_{mot}$ das Motorschleppmoment und $M_{kup}$ das Kupplungssollmoment ist.

15. Verfahren nach Anspruch 13 , **dadurch gekennzeichnet, dass**
beim Wiedereinkuppeln während der Schlupfphase das Kupplungssollmoment ($M_{kup}$) nicht exakt bis zum Fahrerwunschmoment ($M_{soll}$) geführt wird, sondern nur bis zu einem Wert, der etwas unter dem Fahrerwunschmoment ($M_{soll}$) liegt und sich aus der Gleichung

$$M_{kup} = M_{soll}\ \frac{\Theta^{*}_{fzg}}{\Theta^{*}_{fzg} + \Theta_{antr}} \qquad (Gl.\ 8)$$

ergibt, worin $\Theta_{antr}$ die Summe aller antriebsseitigen Trägheitsmomente und $\Theta^{*}_{fzg}$ das auf die Getriebeeingangsseite bezogene Trägheitsmoment aller rotierenden Bauteile des Antriebsstrangs inklusive der in ein äquivalentes Trägheitsmoment umgerechneten Fahrzeugmasse bedeuten.

16. Verfahren nach wenigstens einem der vorherigen Ansprüche, **dadurch gekennzeichnet, dass** bei einer Rückschaltung mit Beschleunigungswunsch das Kupplungsmoment ($M_{kup}$) erst dann erhöht wird, wenn die Motordrehzahl ($\omega_{mot}$) größer oder gleich der Getriebedrehzahl ($\omega_{get}$) des Zielgangs ist.

17. Verfahren nach wenigstens einem der vorherigen Ansprüche, **dadurch gekennzeichnet, dass** bei einer Rückschaltung mit Verzögerungswunsch keine Motordrehzahlanhebung durch den Motordrehzahlregler erfolgt.

18. Verfahren nach wenigstens einem der vorherigen Ansprüche, **dadurch gekennzeichnet, dass** bei einer Rückschaltung mit Verzögerungswunsch eine abgestimmt langsame Motordrehzahlanhebung dann durchgeführt wird, wenn bei sehr geringer Fahrzeugverzögerung eine nicht tolerierbar lange Einkuppelzeit entstehen würde.

19. Verfahren nach wenigstens einem der vorherigen Ansprüche, **gekennzeichnet durch** folgende Verfahrensschritte:

a) Prüfen, ob eine Gangwechselanforderung vorliegt (Schritt 10).
b) Sofern eine Gangwechselanforderung vorliegt, Reduzieren des Kupplungs- und des Motormoments (Schritt 20).
c) Prüfen, ob Kupplungsschlupf auftritt oder ob die Kupplung ganz geöffnet ist (Schritt 30).
d) Wenn kein Kupplungsschlupf vorliegt oder die Kupplung noch nicht ganz geöffnet ist, zurück zu Punkt b (Schritt 20).
e) Wenn Kupplungsschlupf stattfindet oder die Kupplung ganz geöffnet ist, Berechnung des Motordrehzahlverlaufs (Schritt 40).
f) Durchführung der Kupplungsmomentsteuerung und der Motordrehzahlregelung (Schritt 50).
g) Prüfen, ob der Zielgang eingelegt ist und ob die Motordrehzahl im Zielbereich liegt (Schritt 60).
h) Wenn der Zielgang noch nicht eingelegt ist und die Motorzieldrehzahl noch nicht erreicht ist, zurück zu Punkt e (=Schritt 40).
i) Wenn der Zielgang eingelegt ist und die Motorzieldrehzahl erreicht ist, Erhöhung des Kupplungsmoments (Schritt 70).
j) Berechnen der Motorsolldrehzahl und Durchführung einer Motordrehzahlregelung (Schritt 80).
k) Prüfen, ob Kupplungsschlupf auftritt oder ob die Kupplung geöffnet ist (Schritt 90).
l) Wenn Kupplungsschlupf auftritt oder die Kupplung noch geöffnet ist, zurück zu Punkt i (=Schritt 70).
m) Wenn kein Kupplungsschlupf auftritt und die Kupplung nicht mehr geöffnet ist, Erhöhung des Kupplungs- und des Motordrehmoments (Schritt 100).
n) Feststellen, dass die Kupplung geschlossen und das Fahrerwunschdrehmoment erreicht ist (Schritt 110).

**Claims**

1. Method for controlling and adjusting the clutch torque and engine torque during a gear shifting process of an automated transmission or of a dual clutch transmission, comprising the following steps:

a) controlling the engine torque;
b) determining that a gearspeed change request is present;
c) reducing the clutch torque and the engine torque;
d) ending the control of the engine torque as soon as clutch slip takes place or the clutch is entirely opened;
e) adjusting the engine speed to a predetermined distance from the transmission input rotational speed (synchronous rotational speed) of the target gearspeed;
f) determining that the target gearspeed is engaged and the engine rotational speed is in the target range (synchronizing rotational speed);
g) increasing the clutch torque; and
h) ending the adjustment of the engine rotational speed and controlling the engine torque as soon as the clutch torque ($M_{clu}$) has reached a final value with respect to this gear shifting process,
i) wherein the control of the clutch torque takes place during the entire gear shifting process, and the engine target rotational speed is calculated from the rotational speeds of the vehicle wheels ($\omega_{wheel}$), the differential transmission ratio and the transmission ratio.

2. Method according to Claim 1, **characterized in that** a predefined profile of the clutch torque ($M_{clu}$) is used during adjustment of the engine rotational speed, in order to determine the engine setpoint rotational speed ($\omega_{eng, setp, new}$) and the pilot-controlled engine torque ($M_{eng}$).

3. Method according to Claim 1 or Claim 2, **characterized in that** the control and/or adjustment of the engine torque ($M_{eng}$) is carried out by an engine control unit before the start of the gear shifting process and after the termination of the gear shifting process.

4. Method according to at least one of the preceding claims, **characterized in that** the adjustment of the engine rotational speed during the gear shifting process takes place in a transmission control unit.

5. Method according to Claim 3, **characterized in that** the adjustment of the engine rotational speed during the gear shifting process takes place by means of the engine control unit.

6. Method according to Claim 4 or Claim 5, **characterized in that** the transmission control unit transmits the engine setpoint rotational speed ($\omega_{eng}$) and/or the clutch actual torque ($M_{clu}$) to the engine control unit.

7. Method according to at least one of the preceding claims, **characterized in that** the engine rotational speed ($\omega_{eng}$) is in the target range when, given a positive driver's request torque ($M_{setp}$), the engine rotational speed ($\omega_{eng}$) is higher than or equal to the transmission input rotational speed ($\omega_{tra}$) or when, given a negative driver's request torque ($M_{setp}$), the engine rotational speed ($\omega_{eng}$) has a smaller value than or the same value as the transmission input rotational speed ($\omega_{tra}$).

8. Method according to at least one of the preceding claims, **characterized in that** there is a changeover from the adjustment of the engine rotational speed to the control of the engine torque if, in a re-engagement phase, the differences in rotational speed between the engine rotational speed ($\omega_{eng}$) and the transmission input rotational speed ($\omega_{tra}$) are approximated to one another and the clutch torque ($M_{clu}$) is reliably approximated to the driver's request torque ($M_{setp}$).

9. Method according to at least one of the preceding claims, **characterized in that** the engine target rotational speed (synchronizing rotational speed) is determined from the measured transmission input rotational speed ($\omega_{tra}$).

10. Method according to at least one of the preceding claims, **characterized in that** the clutch actual torque is controlled in the form of a linear profile, a freely adjustable profile from a stored characteristic curve or with a PT1 or PT2 characteristic to the target value calculated from the driver's request torque ($M_{setp}$).

11. Method according to at least one of the preceding claims, **characterized in that** the time at which the two specified rotational speeds ($\omega_{eng}$, $\omega_{tra}$) will supposedly be synchronous again is estimated from the current gradients of the engine rotational speed ($\omega_{eng}$) and transmission input speed ($\omega_{tra}$).

12. Method according to Claim 11, **characterized in that** the engine rotational speed ($\omega_{eng}$) is approximated to the transmission input rotational speed ($\omega_{tra}$) by a rotational speed profile defined in a characteristic curve, if the estimated time when the synchronizing rotational speed is reached undershoots a predetermined threshold value which is dependent on the driver's request torque ($M_{setp}$) and the engagement speed.

13. Method according to Claim 12, **characterized in that** the setpoint rotational speed difference during a gear shifting process over the time which has passed during a gear shifting process is stored in the characteristic curve.

14. Method according to at least one of the preceding claims, **characterized in that** the engine setpoint rotational speed ($\omega_{eng, setp, new}$) for a gear shifting process is calculated as follows:

$$\omega_{eng,\ setp,\ new} = \omega_{eng,setp,old} + \frac{\Delta t}{\Theta_{drive}} \left( M'_{eng} - M_{clu} \right) \qquad \text{(Equation 1)}$$

wherein $\omega_{eng, setp, old}$ is the previous engine setpoint rotational speed, $\Delta t$ is a time interval, $\omega_{drive}$ is the sum of all the moments of drive inertia, $M'_{eng}$ is the engine drive torque and $M_{clu}$ is the clutch setpoint torque.

15. Method according to Claim 13, **characterized in that** in the case of re-engagement during the slip phase the clutch setpoint torque ($M_{clu}$) is not adjusted precisely to the driver's request torque ($M_{setp}$) but instead only up to a value which is somewhat below the driver's request torque ($M_{setp}$) and is obtained from the equation

$$M_{clu} = M_{setp} \frac{\Theta*_{veh}}{\Theta*_{veh} + \Theta_{drive}} \qquad \text{(Equation 8)}$$

where $\Theta_{drive}$ is the sum of all the drive-side moments of inertia and $\Theta^*_{veh}$ is the moment of inertia, related to the transmission input side, of all the rotating components of the drive train including the vehicle mass converted into an equivalent moment of inertia.

16. Method according to at least one of the preceding claims, **characterized in that** in the event of shifting down with an acceleration request the clutch torque ($M_{clu}$) is not increased until the engine rotational speed ($\omega_{eng}$) is higher than or equal to the transmission rotational speed ($\omega_{tra}$) of the target gearspeed.

17. Method according to at least one of the preceding claims, **characterized in that** in the event of shifting down with a deceleration request the engine rotational speed is not increased by the engine rotational speed regulator.

18. Method according to at least one of the preceding claims, **characterized in that** in the event of shifting down with a deceleration request an increase in the engine rotational speed which is adjusted to a low rate is carried out if an intolerably long engagement time would come about in the case of a very small vehicle deceleration.

19. Method according to at least one of the preceding claims, **characterized by** the following method steps:

   a) testing whether a gearspeed change request is present (step 10).
   b) if a gearspeed change request is present, reduction of the clutch torque and of the engine torque (step 20).
   c) testing whether clutch slip occurs or whether the clutch is entirely opened (step 30).
   d) if no clutch slip is present or the clutch is not yet completely opened, back to point b (step 20).
   e) if clutch slip takes place or the clutch is entirely opened, calculation of the engine rotational speed profile (step 40).
   f) carrying out the control of the clutch torque and the adjustment of the engine rotational speed (step 50).
   g) testing whether the target gearspeed is engaged and whether the engine rotational speed is in the target range (step 60).
   h) if the target gearspeed is not yet engaged and the engine target rotational speed is not yet reached, back to point e (= step 40).
   i) if the target gearspeed is engaged and the engine target rotational speed is reached, increasing the clutch torque (step 70).
   j) calculating the engine setpoint rotational speed and carrying out an adjustment of the engine rotational speed (step 80).
   k) testing whether clutch slip occurs or whether the clutch is opened (step 90).
   l) if clutch slip occurs or the clutch is still opened, back to point i (= step 70).
   m) if no clutch slip occurs and the clutch is no longer opened, increasing the clutch torque and the engine torque (step 100).
   n) detecting that the clutch is closed and the driver's request torque is reached (step 110).

**Revendications**

1. Procédé de commande et de réglage du couple moteur et du couple d'embrayage durant une opération de commutation d'une transmission de vitesse automatique ou d'une transmission de vitesse à double embrayage, comprenant les étapes suivantes :

   a) commander le couple moteur ;
   b) déterminer la nécessité d'un changement de rapport ;
   c) réduire le couple d'embrayage et le couple moteur ;
   d) arrêter la commande du couple moteur dès qu'un glissement de l'embrayage se produit ou que l'embrayage est complètement ouvert ;
   e) régler le régime du moteur sur un écart prédéfini par rapport au régime d'entrée de la transmission (régime synchrone) du rapport cible ;

f) déterminer que le rapport cible est engagé et que le régime du moteur se situe dans la plage cible (régime synchrone) ;

g) augmenter le couple d'embrayage ; et

h) arrêter la régulation du régime du moteur et commander le couple moteur dès que le couple d'embrayage ($M_{kup}$) a atteint une valeur finale afférente pour cette opération de commutation,

i) dans lequel la commande du couple d'embrayage a lieu pendant toute la durée de l'opération de commutation, et le régime cible du moteur est calculé à partir des régimes des roues du véhicule ($\omega_{rad}$), du rapport de transmission différentiel et du rapport de transmission.

2. Procédé selon la revendication 1, **caractérisé en ce que**, pendant le réglage du régime du moteur, on utilise une courbe prédéfinie du couple d'embrayage ($M_{kup}$) pour déterminer le régime théorique du moteur ($\omega_{mot, soll, neu}$) et le couple moteur ($M_{mot}$) précommandé.

3. Procédé selon la revendication 1 ou la revendication 2, **caractérisé en ce que** la commande et/ou le réglage du couple moteur ($M_{mot}$) est réalisée avant le début de l'opération de commutation et après la fin de l'opération de commutation par un appareil de commande du moteur.

4. Procédé selon l'une au moins des revendications précédentes, **caractérisé en ce que** le réglage du régime du moteur a lieu pendant l'opération de commutation dans un appareil de commande de la transmission.

5. Procédé selon la revendication 3, **caractérisé en ce que** le réglage du régime du moteur a lieu pendant l'opération de commutation par l'appareil de commande du moteur.

6. Procédé selon la revendication 4 ou la revendication 5, **caractérisé en ce que** l'appareil de commande de la transmission transmet le régime théorique du moteur ($\omega_{mot}$) et/ou le couple d'embrayage ($M_{kup}$) réel à l'appareil de commande du moteur.

7. Procédé selon l'une au moins des revendications précédentes, **caractérisé en ce que** le régime du moteur ($\omega_{mot}$) se situe dans la plage cible à partir du moment où à un couple demandé ($M_{soll}$) par le conducteur et positif, le régime du moteur ($\omega_{mot}$) est supérieur ou égal au régime d'entrée de la transmission ($\omega_{get}$), ou à partir du moment où à un couple demandé ($M_{soll}$) par le conducteur et négatif, le régime du moteur ($\omega_{mot}$) est inférieur ou égal au régime d'entrée de la transmission ($\omega_{get}$).

8. Procédé selon l'une au moins des revendications précédentes, **caractérisé en ce que** l'on passe du réglage du régime du moteur à la commande du couple moteur à partir du moment où dans une phase de réembrayage, la différence de régime entre le régime du moteur ($\omega_{mot}$) et le régime d'entrée de la transmission ($\omega_{get}$) est ajustée en fonction l'un de l'autre, et le couple d'embrayage ($M_{kup}$) est ajusté de manière sûre au couple demandé ($M_{soll}$) par le conducteur.

9. Procédé selon l'une au moins des revendications précédentes, **caractérisé en ce que** le régime cible du moteur (régime synchrone) est déterminé à partir du régime d'entrée mesuré de la transmission ($\omega_{get}$).

10. Procédé selon l'une au moins des revendications précédentes, **caractérisé en ce que** le couple d'embrayage réel est commandé sous la forme d'une courbe linéaire, d'une courbe librement ajustable à partir d'un champ de caractéristiques mémorisé ou à l'aide d'une caractéristique PT1 ou PT2, vers la valeur cible calculée à partir du couple demandé ($M_{soll}$) par le conducteur.

11. Procédé selon l'une au moins des revendications précédentes, **caractérisé en ce que**, à partir des gradients actuels de régime du moteur et de régime d'entrée de la transmission ($\omega_{mot}$, $\omega_{get}$), on estime le moment où lesdits deux régimes ($\omega_{mot}$, $\omega_{get}$) seront probablement à nouveau synchrones.

12. Procédé selon la revendication 11, **caractérisé en ce que** le régime du moteur ($\omega_{mot}$) est ajusté au régime d'entrée de la transmission ($\omega_{get}$), selon une courbe de régime définie dans un champ de caractéristiques, lorsque la durée estimée jusqu'à ce que le régime synchrone soit atteint est inférieure à une valeur seuil prédéfinie dépendante du couple demandé ($M_{soll}$) par le conducteur et de la vitesse d'embrayage.

13. Procédé selon la revendication 12, **caractérisé en ce que** dans le champ de caractéristiques, la différence de régime théorique lors d'une opération de commutation est mémorisée pendant tout le temps écoulé durant une opération de commutation.

14. Procédé selon l'une au moins des revendications précédentes, **caractérisé en ce que** le régime théorique du moteur ($\omega_{mot, soll, neu}$) pour une opération de commutation est calculé comme suit :

$$\omega_{mot, soll, neu} = \omega_{mot, soll, alt} + \frac{\Delta t}{\Theta_{antr}} \ (M'_{mot} - M_{kup}) \quad (\text{éq. 1})$$

où $\omega_{mot, soll, alt}$ est le régime théorique du moteur jusqu'à présent, $\Delta t$ est un intervalle de temps, $\Theta_{antr}$ est la somme de tous les moments d'inertie de l'entraînement, $M'_{mot}$ est le couple résistant du moteur et $M_{kup}$ est le couple d'embrayage théorique.

15. Procédé selon la revendication 13, **caractérisé en ce que**, lors du réembrayage pendant la phase de glissement, le couple d'embrayage ($M_{kup}$) théorique est amené non pas exactement jusqu'au couple demandé ($M_{soll}$) par le conducteur mais seulement jusqu'à une valeur qui est légèrement inférieure au couple demandé ($M_{soll}$) par le conducteur et qui est donnée par l'équation

$$M_{kup} = M_{soll} \frac{\overset{\bullet}{\Theta}_{fzg}}{\overset{\bullet}{\Theta}_{fzg} + \Theta_{antr}} \quad (\text{éq. 8})$$

où $\Theta_{antr}$ est la somme de tous les moments d'inertie côté entraînement et $\Theta^*_{fzg}$ est le moment d'inertie afférent au côté entrée de la transmission, de tous les composants rotatifs de la chaîne cinématique, y compris la masse du véhicule convertie en moment d'inertie équivalent.

16. Procédé selon l'une au moins des revendications précédentes, **caractérisé en ce que**, lors d'une rétrogradation avec demande d'accélération, le couple d'embrayage ($M_{kup}$) est augmenté seulement à partir du moment où le régime du moteur ($\omega_{mot}$) est supérieur ou égal au régime de transmission ($\omega_{get}$) du rapport cible.

17. Procédé selon l'une au moins des revendications précédentes, **caractérisé en ce que**, lors d'une rétrogradation avec demande de décélération, le régulateur de régime du moteur n'augmente pas le régime du moteur.

18. Procédé selon l'une au moins des revendications précédentes, **caractérisé en ce que**, lors d'une rétrogradation avec demande de décélération, le régime du moteur est augmenté lentement de manière adaptée à partir du moment où une très faible décélération du véhicule génèrerait une durée d'embrayage intolérablement longue.

19. Procédé selon l'une au moins des revendications précédentes, **caractérisée en ce qu'**il comprend les étapes de procédé suivantes :

a) contrôler la nécessité d'un changement de rapport (étape 10) ;
b) si un changement de rapport est nécessaire, réduire le couple d'embrayage et le couple moteur (étape 20) ;
c) contrôler si un glissement de l'embrayage se produit ou si l'embrayage est complètement ouvert (étape 30) ;
d) en l'absence de glissement de l'embrayage ou si l'embrayage n'est pas encore complètement ouvert, revenir au point b (= étape 20) ;
e) si un glissement de l'embrayage se produit ou si l'embrayage est complètement ouvert, calculer la courbe de régime du moteur (étape 40) ;
f) effectuer la commande du couple d'embrayage et le réglage du régime du moteur (étape 50) ;
g) contrôler si le rapport cible est engagé et si le régime du moteur se situe dans la plage cible (étape 60) ;
h) si le rapport cible n'est pas encore engagé et si le régime cible du moteur n'a pas encore été atteint, revenir au point e (= étape 40) ;
i) si le rapport cible est engagé et le régime cible du moteur atteinte, augmenter le couple d'embrayage (étape 70) ;
j) calculer le régime théorique du moteur et effectuer un réglage du régime du moteur (étape 80) ;
k) contrôler si un glissement de l'embrayage se produit ou si l'embrayage est ouvert (étape 90) ;
l) si un glissement de l'embrayage se produit ou si l'embrayage est encore ouvert, revenir au point i (= étape 70) ;
m) en l'absence de glissement de l'embrayage et si l'embrayage n'est plus ouvert, augmenter le couple d'embrayage et le couple moteur (étape 100) ;

n) vérifier que l'embrayage est fermé et que le couple demandé par le conducteur a été atteint (étape 110).

## FIG 1

**FIG 2**

Gangwechsel-anforderung — 10

Reduzierung von Kupplungs- und Motormoment — 20

30
Kupplungsschlupf?
nein / ja

Berechnung des Motordrehzahlverlaufes — 40

Kupplungsmomentenführung und Motordrehzahlregelung — 50

60
Zielgang eingelegt und Motordrehzahl im Zielbereich ?
nein / ja

Kupplungsmomentenerhöhung — 70

Motordrehzahlberechnung und Motordrehzahlregelung — 80

90
Kupplungsschlupf?
ja / nein

Erhöhung von Kupplungs- und Motormoment — 100

Kupplung geschlossen und Fahrerwunschmoment erreicht — 110

## FIG 3

## FIG 4

Motordrehmomentführung

Motordrehzahlregelung

Motordrehmomentführung

## FIG 5

## FIG 6

Motordrehmomentführung

Motordrehzahlregelung

Motordrehmomentführung

## FIG 7

$\omega$

$\omega_{mot}$

$\omega_{get}$

0 U/min

t

## FIG 8

$M_{mot}$

N

$M_{kup}$

$M_{soll}$

0 Nm

$t_{SYN}$

t

Motordrehmomentführung

Motordrehzahlregelung

Motordrehmomentführung

## FIG 9

## FIG 10

Motordrehmomentführung

Motordrehzahlregelung

Motordrehmomentführung

## FIG 11

## FIG 12

## FIG 13

## FIG 14

$\omega_{mot(Sport)}$

$\omega_{get}$

$\omega$

0 U/min

$t_{ZG}$

t

## FIG 15

$\omega_{mot(Komfort)}$

$\omega_{get}$

$\omega$

0 U/min

$t_{ZG}$

t

## FIG 16

$\omega_{get}$    $\omega_{mot(Schub)}$

$\omega$

0 U/min

$t_{ZG}$

t

## FIG 17

## FIG 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6298009 B

- US 6258009 B1

**In der Beschreibung aufgeführte Nicht-Patentliteratur**

- Sequenzielles M-Getriebe der zweiten Generation mit Drivelogic - Teil 1. *Zeitschrift ''ATZ,* November 2001, 1024-1035